# EUROPEAN PATENT APPLICATION

(11) **EP 2 315 210 A2**
(43) Date of publication of application: **27.04.2011**
(21) Application number: 10176150.0
(22) Date of filing: 10.09.2010
(51) Int. Cl.: G11B 33/12

(54) **Mounting apparatus for data storage device**

(30) Priority: 22.10.2009 CN 200910308658
(71) Applicant: Hong Fu Jin Precision Industry (ShenZhen) Co., Ltd., Longhua Town, Bao'an District Shenzhen City Guangdong 518109 (CN); Hon Hai Precision Industry Co., Ltd., Tu-cheng City, Taipei Hsien (TW)
(72) Inventor: Zhang, Guang-Yi, 518109, Shenzhen Guangdong (CN); Zhang, Zhe, 518109, Shenzhen City Guangdong (CN); Zhou, Hai-Chen, 518109, Shenzhen City Guangdong (CN)
(74) Representative: Wilson, Peter

(57) **Abstract**

A mounting apparatus includes a bracket (10) for accommodating a data storage device (100), a first latch member (20), a second latch member (30), and a locking member (60). The bracket (10) defines a first cutout and a second cutout in opposite sides of the bracket respectively. The first latch member (20) pivotably attaches to a first end of the bracket and includes a pair of first latches (24) movably extending in the first cutout. The second latch member (30) pivotably attaches to a second end of the bracket and includes a pair of second latches (32) movably extending in the second cutout. The second latch member slidably attaches to the first latch member. The locking member (30) slidably attaches to the first latch member (20) to releasably lock the first latch member to the bracket when the first and second latches extend out of the first and second cutouts, respectively.

## Description

### BACKGROUND

### 1. Technical Field

The disclosure relates to mounting apparatuses for data storage devices, and particularly to a mounting apparatus stably securing a data storage device in a computer enclosure.

### 2. Description of Related Art

A bracket accommodating a data storage device is usually installed in a rack in an enclosure of an electronic device. A single movable latch extends from the bracket to latch with the rack. This methodology can be unstable due to only one side of the rack engaging. Therefore, there is room for improvement within the art.

### BRIEF DESCRIPTION OF THE DRAWINGS

FIG. 1 is an exploded, isometric view of an exemplary embodiment of a mounting apparatus with a data storage device.

FIG. 2 is similar to FIG. 1, but viewed from another perspective.

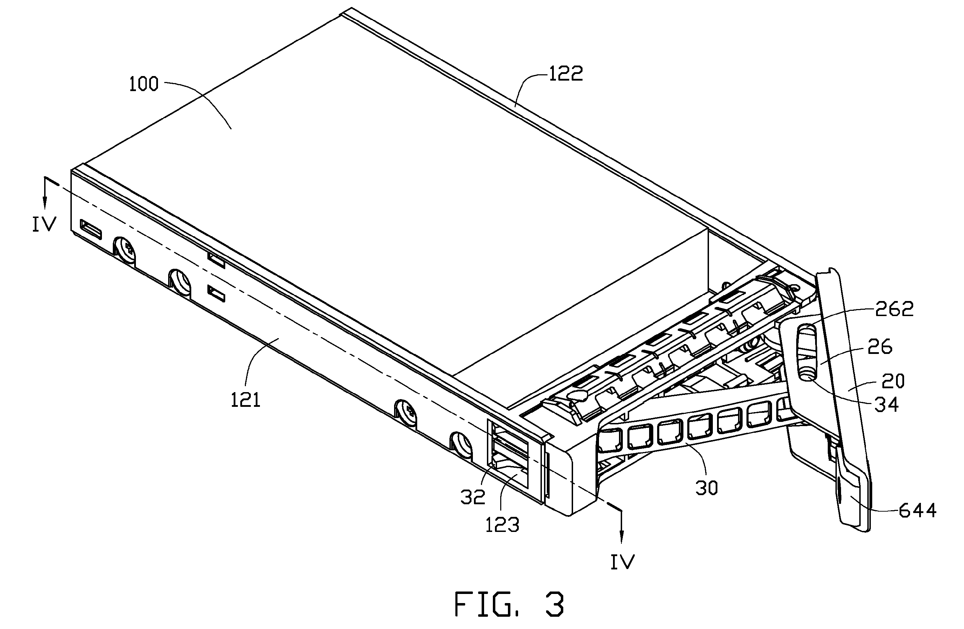

FIG. 3 is an assembled, isometric view of FIG. 1, showing the mounting apparatus in an open position.

FIG. 4 is a cross-sectional view of FIG. 3, taken along the line IV-IV

FIG. 5 is similar to FIG. 3, showing the mounting apparatus in a closed position.

FIG. 6 is a cross-sectional view of FIG. 5, taken along the line VI-VI.

### DETAILED DESCRIPTION

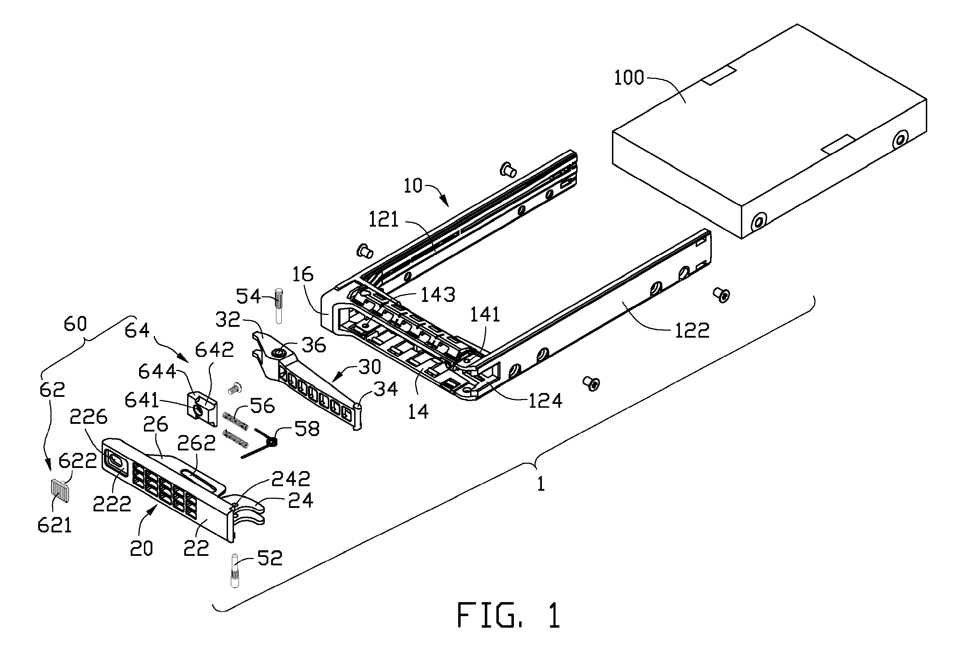

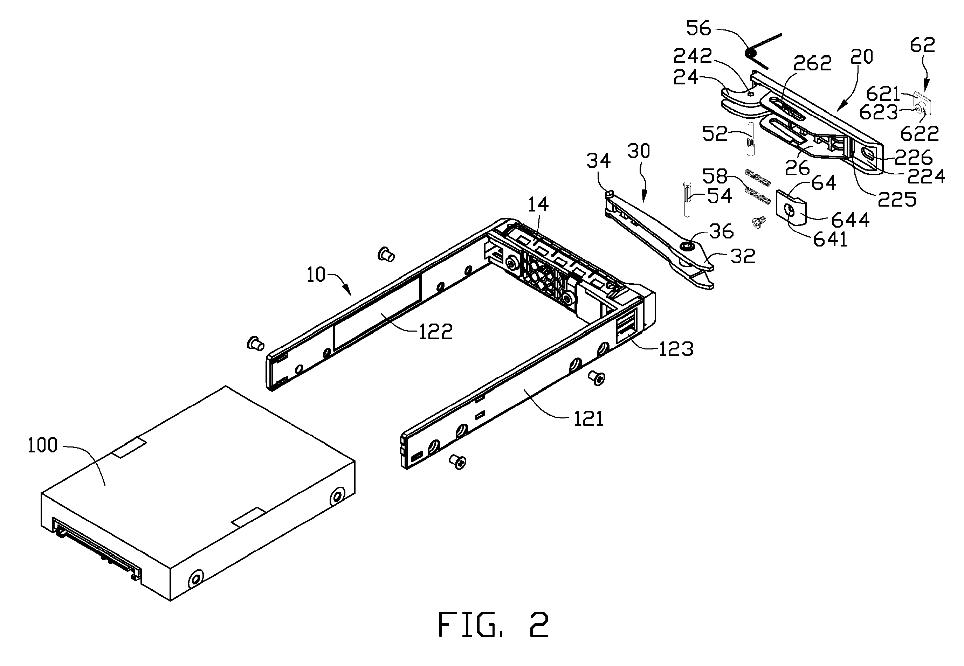

Referring to FIGS. 1 and 2, an exemplary embodiment of a mounting apparatus 1 provided to fix a data storage device 100 to a rack in an enclosure of an electronic device (not shown). The rack includes two opposite sidewalls each defining a latch hole. The mounting apparatus 1 includes a bracket 10, a first latch member 20, a second latch member 30, a first pivot shaft 52, a second pivot shaft 54, a pair of first resilient members 56, a second resilient member 58, and a locking member 60. In this exemplary embodiment, the pair of first resilient members 56 is a pair of coil springs, and the second resilient member 58 is a torsion spring.

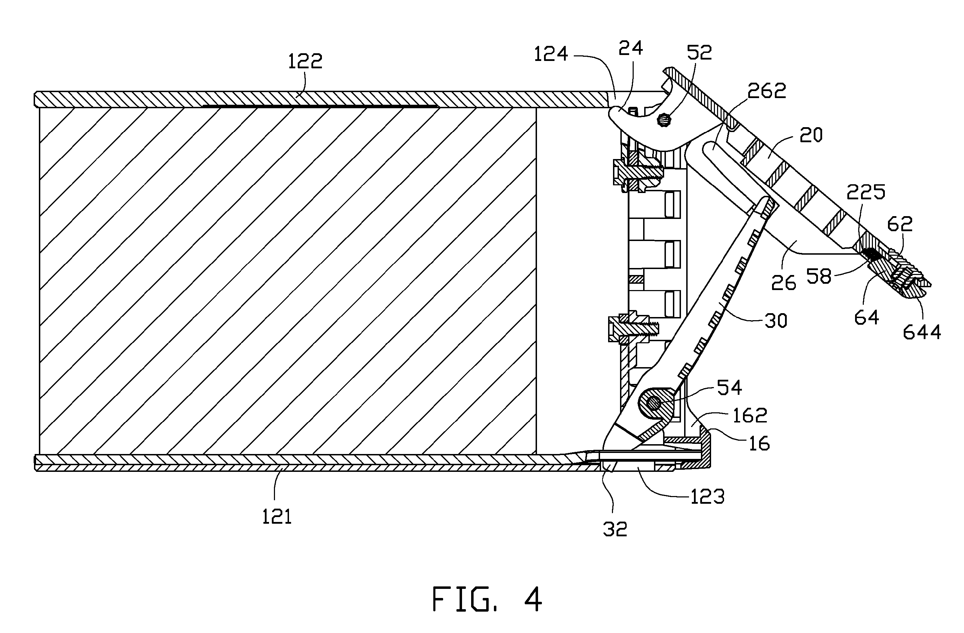

The bracket 10 includes, two opposite lateral walls 121 and 122 for sandwiching the data storage device 100, two horizontal fixing plates 14 connecting frontal ends of the two lateral walls 121 and 122, and a locking plate 16 connecting frontal edges of the fixing plates 14 near the lateral wall 121 together. A receiving space is bounded by the fixing plates 14, the frontal ends of the lateral walls 121 and 122, and the locking plate 16, to receive the first latch member 20 and the second latch member 30. A pair of first pivot holes 141 and a pair of second pivot holes 143 respectively define in opposite end portions of the fixing plates 14. A first cutout 123 defines in the lateral wall 121 and a second cutout 124 defines in the lateral wall 122 adjacent the opposite end portions of the fixing plates 14. Referring to FIG. 4, the locking plate 16 includes a slanting end, and a lock slot 162 defines in the bracket 10, under a portion forming the slanting end of the locking plate 16.

The first latch member 20 includes a bezel 22. A recess 222 defines in a first end portion of the bezel 22. A first sliding slot 226 defines in the recess 222. A pair of curved first latches 24 perpendicularly extends rearward from a second end portion of the bezel 22. A pivot hole 242 defines in each of the first latches 24. A pair of spaced fixing tabs 26 perpendicularly extends rearward from a middle portion of the bezel 22. A second sliding slot 262 defines in each of the fixing tabs 26. A restricting plate 225 forms on the first latch member 20, near end portions of the fixing tabs 26 away from the first latches 24.

The second latch member 30 includes a pair of sliding posts 34 extending from an end portion of the second latch member 30, and a pair of triangular second latches 32 extending from an opposite end portion of the second latch member 30. A pivot hole 36 defines in the second latch member 30 adjacent the second latches 32.

The locking member 60 includes a push button 62 and a lock block 64. The push button 62 includes an operating tab 621, and a post 622 perpendicularly extending from a rear surface of the operating tab 621. A threaded hole 623 defines in the post 622. A through hole 641 defines in the lock block 64. A pair of fixing slots 642 defines in a front surface of the lock block 64, beside the through hole 641. A curved lock end 644 forms at one end of the lock block 64.

In assembly, the first latch member 20 pivotably attaches to the bracket 10, with the first latches 24 extending through the second cutout 124 of the lateral wall 122 of the bracket 10. The second resilient member 58 is disposed between first latches 24. The first shaft 52 extends through the first pivot holes 141 of the bracket 10, the pivot holes 242 of the first latch member 20, and the second resilient member 58. Two extension legs of the second resilient member 58 abut against the bracket 10 and the first latch member 20, respectively. The second latches 32 of the second latch member 30 receive in the second cutout 123 of the lateral wall 121 of the bracket 10, and the sliding posts 34 of the second latch member 30 slidably receive in the corresponding second sliding slots 262. The second pivot shaft 54 extends through the second pivot holes 143 of the bracket 10 and the pivot hole 36 of the second latch member 30, pivotably attaches the second latch member 30 to the bracket 10. The push button 62 receives in the recess 222 of the first latch member 20, and the post 622 of the push button 62 slidably extends through the first sliding slot 226 of the first latch member 20. The pair of first resilient members 56 receives in the fixing slots 642 of the lock block 64, respectively. Two first ends of the pair of first resilient members 56 abut against the restricting plate 225 of the first latch member 20, while two opposite second ends of the pair of first resilient members 56 abut against portions of the lock block 64 located at the inner ends of the pair of corresponding fixing slots 642. A fastener (not labeled) extends through the through hole 641 of the lock block 64 to engage in the threaded hole 623 of the post 622 of the push button 62. Therefore, the locking member 60 slidably attaches to the first latch member 20.

The data storage device 100 sandwiches between the lateral walls 121 and 122 of the bracket 10, and securely fixes in the bracket 10 by conventional fasteners, such as screws.

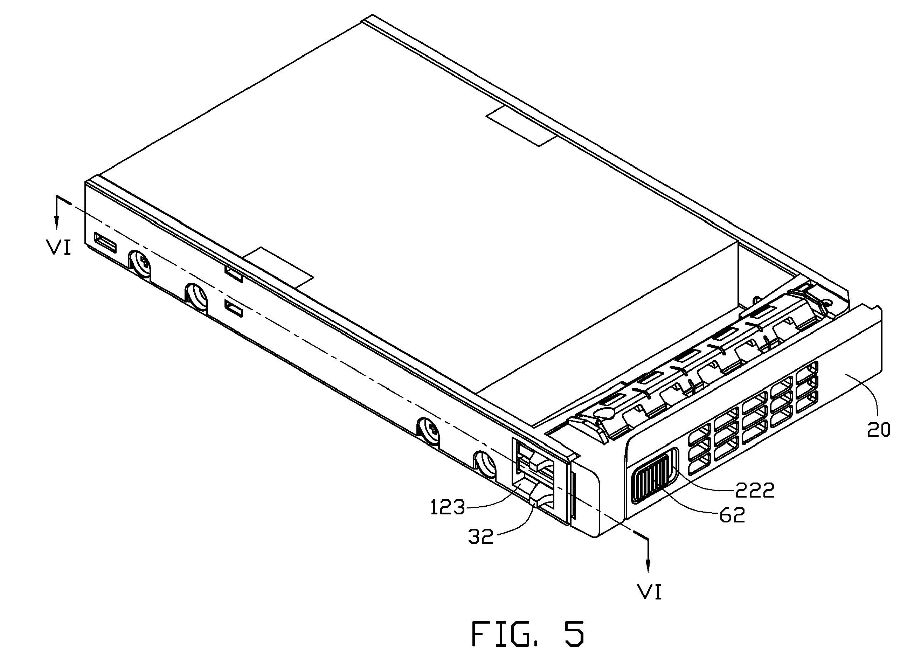

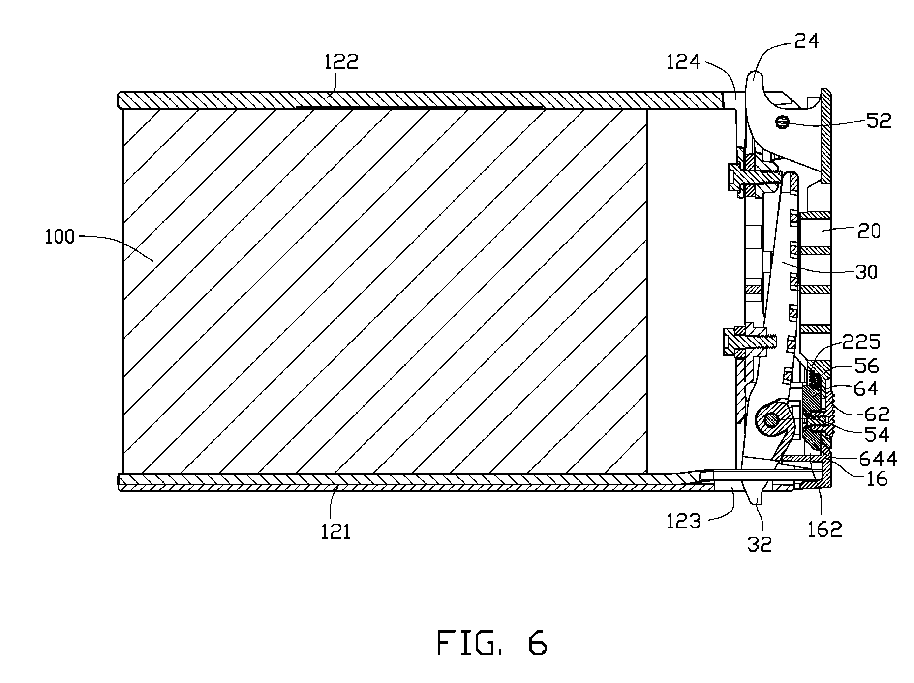

Referring to FIG. 4 to FIG. 6, when the mounting apparatus 1 together with the data storage device 100 are inserted into the rack, the first latch member 20 is pivoted towards the bracket 10 in relation to the first pivot shaft 52, and the pair of first resilient members 56 resiliently deforms. The sliding posts 34 of the second latch member 30 forcibly slide in the second sliding slots 262, so that the second latch member 30 also pivots towards the bracket 10. The first latches 24 of the first latch member 20 gradually extend out of the cutout 124 of the lateral wall 122 of the bracket 10. The second latches 32 of the second latch member 30 gradually extend out of the cutout 123 of the lateral wall 121 of the bracket 10, to engage respectively with the latch holes of the two sidewalls of the rack. When the lock end 644 of the locking member 60 abuts against the slanting end of the locking plate 16 of the bracket 10, the second resilient members 58 compress so that the locking member 60 slides into the first latch member 20. When the lock end 644 extends into the lock slot 162 of the bracket 10, the second resilient members 58 restore so that the lock end 644 of the locking member 60 slides to abut against the inner side of the locking plate 16. Therefore, the first latch member 20 locks to the bracket 10 and the combined first and second latch member 20 and 30 are received in the receiving space of the bracket 10, which can stably fix the data storage device 100 in the rack.

To detach the mounting apparatus 1 with the data storage device 100 from the rack, the locking member 60 is pushed away from the locking plate 16 of the bracket 10 to release the lock end 644 of the locking member 60 from the locking plate 16 of the bracket 10. The second resilient member 58 restores to pivot the first latch member 20 away from the bracket 10. The sliding posts 34 of the second latch member 30 slide in the second sliding slots 262 of the first latch member 20 so the second latch member 30 also pivots away from the bracket 10. The first latches 24 of the first latch member 20 and the second latches 32 of the second latch member 30 withdraw from the latch holes of the rack and the first and second cutouts 123 and 124, and extended into the bracket 10, which can conveniently detach the data storage device 100 from the rack.

It is to be understood, however, that even though numerous characteristics and advantages of the present disclosure have been set forth in the foregoing description, together with details of the structure and function of the disclosure, the disclosure is illustrative only, and changes may be made in detail, especially in matters of shape, size, and arrangement of parts within the principles of the disclosure to the full extent indicated by the broad general meaning of the terms in which the appended claims are expressed.

## Claims

1. A mounting apparatus for a data storage device, the mounting apparatus comprising:
a bracket for accommodating the data storage device therein, the bracket defining a first cutout and a second cutout in opposite sides of the bracket respectively;
a first latch member pivotably attaching to a first end of the bracket and comprising a pair of first latches movably extending in the first cutout;
a second latch member pivotably attaching to a second end of the bracket and comprising a pair of second latches movably extending in the second cutout, the second latch member slidably attaching to the first latch member; and
a locking member slidably attaching to the first latch member to releasably lock the first latch member to the bracket;
wherein the first latch member is pivotable to pivot the second latch member, in order to drive the first and second latches to extend out of or withdraw in the first and second cutouts, respectively.

2. The mounting apparatus of claim 1, wherein the bracket comprises a first lateral wall and a second lateral wall for sandwiching the data storage device; the first cutout defines in a frontal end of the first lateral wall, and the second cutout defines in a frontal end of the second lateral wall.

3. The mounting apparatus of claim 2, wherein a pair of fixing plates connects the frontal ends of the first and second lateral walls of the bracket, and a pair of first pivot holes and a pair of second pivot holes respectively define in two end portions of the fixing plates to pivotably engage with the first latch member and the second latch member, respectively.

4. The mounting apparatus of claim 3, wherein the first latch member comprises a bezel; the pair of first latches perpendicularly extends from the bezel, each of the pair of first latches defines a pivot hole, a torsion spring is disposed between the first latches, and a shaft extends through the pivot holes of the pair of first latches, the first pivot holes of the bracket, and the torsion spring, pivotably attaches the first latch member to the bracket.

5. The mounting apparatus of claim 3 or claim 4, wherein the second latch member defines a pivot hole near the second latches of the second latch member, and a shaft extends through the pivot holes of the second latch member and the second pivot holes of the bracket, pivotably attaches the second latch member to the bracket.

6. The mounting apparatus of one of claims 3 to 5, wherein a locking plate connects with front edges of the pair of fixing plates, a lock slot defines in the bracket inside the locking plate, the first latch member comprises a bezel; a recess defines in the bezel, a sliding slot defines in the recess, the locking member slidably engages in the recess and the sliding slot and comprises a lock end to engage with the locking plate when the lock end extends into the lock slot.

7. The mounting apparatus of claim 6, wherein the locking member comprises a push button slidably receiving in the recess of the first latch member, and a lock block attaching to the push button; the lock end of the locking member curvedly forms at an end of the lock block.

8. The mounting apparatus of claim 7, wherein a pair of fixing slots defines in the lock block for receiving a pair of coil springs, a restricting plate forms on the first latch member to hold the coil springs in the respective fixing slots.

9. The mounting apparatus of claim 8, wherein the push button comprises an operating tab and a post with a threaded hole perpendicularly extending from the operating tab; the lock block defines a through hole between the fixing slots, a fastener extends through the through hole to engage in the threaded hole of the push button, fixes the lock block to the push button.

10. The mounting apparatus of any preceding claim, wherein the first latch member comprises a bezel; the bezel comprises a pair of spaced fixing tabs perpendicularly extending from the bezel; a sliding slot defines in each of the pair of fixing tabs, a pair of sliding posts extends from one end portion of the second latch member away from the second latches to slidably receive in the sliding slots, respectively.
